# EUROPÄISCHE PATENTANMELDUNG

(11) **EP 0 949 287 A2**
(43) Veröffentlichungstag der Anmeldung: **13.10.1999**
(21) Anmeldenummer: 99106765.3
(22) Anmeldetag: 03.04.1999
(51) Int. Cl.: C08G 63/00, C08G 64/00, C08G 69/00, C09D 5/44, C09K 19/38

(54) **Wetterstabile cholesterische Flüssigkristallpolymere**

(30) Priorität: 11.04.1998 DE 19816268
(71) Anmelder: Clariant GmbH, 65929 Frankfurt am Main (DE)
(72) Erfinder: Schönfeld, Axel Dr., 65207 Wiesbaden (DE); Stohr, Andreas Dr., 65830 Kriftel (DE)

(57) **Zusammenfassung**

Die Erfindung betrifft ein cholesterisches flüssigkristallines Polymer, das mindestens ein Stabilisator-Comonomer aus der Gruppe der UV-Absorber oder Antioxidantien im Molekül enthält.

## Beschreibung

Die Erfindung betrifft cholesterische Flüssigkristallpolymere (cLCPs) mit optisch variablen Eigenschaften und einer erhöhten Wetterstabilität.

Cholesterische Flüssigkristallpolymere sind bekannt, z.B. aus
DE-A-42 40 743, EP-A-0 724 005 und DE-A-195 38 700.
Sie besitzen eine verdrillte Struktur mit einer Ganghöhe, die einer Wellenlänge des Lichtes im Bereich von UV bis IR entspricht. Cholesterische Flüssigkristalle, oder allgemein flüssigkristalline Substanzen mit chiraler Phase, die eine verdrillte Struktur mit einer gewünschten Ganghöhe besitzen, können beispielsweise aus nematischen Flüssigkristallpolymeren (LCP) erhalten werden, indem man ihnen eine chirale Substanz beimischt oder die chirale Substanz in das Polymer einbaut. Art und Anteil der chiralen Substanz bestimmen die Ganghöhe der verdrillten Struktur und damit die Wellenlänge des reflektierten Lichtes. Die Verdrillung der Struktur kann sowohl links- als auch rechtshändig sein. Die Ausgangssubstanzen besitzen zudem polymerisierbare, polykondensierbare oder einer Polyaddition zugängliche Gruppen.

Je nach Gehalt an chiralem Monomer zeigt das Material ausgeprägte Farbeffekte, die auf der selektiven Reflexion an der helikalen Überstruktur beruhen. Die genaue Reflexionsfarbe hängt hierbei vom Betrachtungswinkel und vor allem von der Ganghöhe der Helix ab. Für jeden beliebigen Betrachtungswinkel - zum Beispiel senkrechte Aufsicht auf einen Probekörper - erscheint als Reflexionsfarbe eine Farbe mit einer Wellenlänge, die der Ganghöhe der helikalen Überstruktur entspricht. Dies bedeutet, daß das reflektierte Licht eine umso kürzere Wellenlänge hat, je kleiner die Ganghöhe der Helix ist.

CLCP's enthalten meistens aromatische Molekülbausteine. Diese sind mit dem Nachteil einer mangelnden Wetterstabilität, beispielsweise durch starke UV-Absorption, behaftet.

Es ist bekannt, daß polymerisierte Verbindungen in ihrer UV-Stabilität verbessert werden können, indem UV-Stabilisatoren zugemischt werden. Während dieses Konzept bei amorphen und teilkristallinen Systemen etabliert ist und gut funktioniert, so ist es bislang bei flüssigkristallinen Substanzen nicht anwendbar, da die flüssigkristallinen Phasen mit nicht-flüssigkristallinen Komponenten in der Regel nicht mischbar sind. Ein in eine flüssigkristalline Substanz eingemischter UV-Stabilisator wird im Laufe der Zeit ausgeschwitzt, d.h. es findet eine Entmischung statt, und der UV-Stabilisator kann die flüssigkristalline Substanz nicht mehr schützen.

Aufgabe der Erfindung war es daher, ein Material zur Verfügung zu stellen, welches neben einer flüssigkristallinen Struktur mit optisch variablen Eigenschaften eine erhöhte Wetter-Stabilität aufweist.

Es wurde gefunden, daß sich die im Stand der Technik aufgeführten Nachteile überraschenderweise durch den chemischen Einbau von derivatisierten Stabilisatoren umgehen lassen, ohne daß die angestrebten optisch variablen Eigenschaften verloren gehen.

Gegenstand der vorliegenden Erfindung sind daher cholesterische flüssigkristalline Polymere, die mindestens ein Stabilisator-Comonomer aus der Gruppe der UV-Absorber, wie z.B. o-Hydroxybenzophenone, 2-(o-Hydroxyphenyl)-benzotriazole, Phenylsalicylate, oder aus der Gruppe der Antioxidantien, wie z.B. sterisch gehinderte Phenole, sterisch gehinderte Amine, Phosphine, Phosphite, Phosphonite, Thiocarbonsäureester oder Alkylsulfide, im Molekül enthalten.

Die genannten Stabilisator-Comonomere sind oder enthalten insbesondere Moleküle bzw. Molekülteile, die als UV-Absorber die schädliche Strahlungsenergie im photochemisch wirksamen Bereich aufnehmen und meist in Form von Wärme abgeben, oder als Radikalfänger oder Peroxid-Zersetzer zum Oxidationsschutz der Polymere beitragen.
Um kovalent an das cLCP zu binden, müssen die genannten Stabilisator-Comonomere eine oder mehrere, vorzugsweise eine oder zwei, polykondensierbare Gruppen aufweisen, beispielsweise Hydroxy-, Carboxy- und/oder Aminogruppen.

Die der Erfindung zugrunde liegenden cLCPs umfassen sowohl cholesterische flüssigkristalline Hauptkettenpolymere, cholesterische flüssigkristalline Seitengruppenpolymere als auch kombinierte cholesterische Hauptketten-/Seitengruppenpolymere. Die erfindungsgemäßen Polymere können sowohl unvernetzt als auch vernetzt sein. Zur Herstellung vernetzter Systeme ist es möglich, vernetzbare, aber noch nicht vernetzte Polymere nach der Orientierung in der cholesterischen Phase zu vernetzen.

Erfindungsgemäße cholesterische flüssigkristalline Hauptkettenpolymere sind vorzugsweise flüssigkristalline Polyester, Polyamide, Polycarbonate, Polyesteramide und/oder Polyesterimide, die aromatische und/oder cycloaliphatische Hydroxycarbonsäuren, aromatische Aminocarbonsäuren, aromatische und/oder cycloaliphatische Dicarbonsäuren und aromatische und/oder cycloaliphatische Diole und/oder Diamine, und ein oder mehrere chirale, bifunktionelle Comonomere, sowie ein oder mehrere der genannten Comonomere, die als Stabilisatoren wirken, enthalten.

Die chiralen, bifunktionellen Comonomere werden vorzugsweise in einer enantiomerenreinen Form eingesetzt. Bei Verwendung von Enantiomerengemischen eines Comonomers ist darauf zu achten, daß eine Enantiomerenform in einem wirksamen Überschuß vorhanden ist.
Von den chiralen Comonomeren sind insbesondere solche bevorzugt, die sich von Zuckern, Terpenen, Camphersäure, Weinsäure, Binaphthyl- oder Biphenylderivaten ableiten. Bei den Zuckern sind insbesondere Pentosen und Hexosen und davon abgeleitete Derivate von Interesse. Besonders bevorzugt sind Camphersäure, Isosorbid oder Isomannid sowie zur Polymerisation geeignete Derivate davon.

Bevorzugt im Sinne der vorliegenden Erfindung sind cholesterische flüssigkristalline Hauptkettenpolymere, bestehend im wesentlichen aus
a) 0 bis 99 Mol % einer oder mehrerer Verbindungen aus der Gruppe der aromatischen Hydroxycarbonsäuren, cycloaliphatischen Hydroxycarbonsäuren und aromatischen Aminocarbonsäuren;
b) 0 bis 49,5 Mol % einer oder mehrerer Verbindungen aus der Gruppe der aromatischen Dicarbonsäuren und cycloaliphatischen Dicarbonsäuren;
c) 0 bis 49,5 Mol % einer oder mehrerer Verbindungen aus der Gruppe der aromatischen und cycloaliphatischen Diole und Diamine;
d) 0,95 bis 40 Mol %, vorzugsweise 2 bis 25 Mol%, insbesondere 4 bis 20 Mol %, an chiralen, bifunktionellen Comonomeren;
e) 0 bis 15 Mol % einer Komponente mit mehr als zwei funktionellen Gruppen; und
f) 0,05 bis 10 Mol %, vorzugsweise 0,1 bis 2 Mol %, eines der genannten Comonomere, das als Stabilisator wirkt,
wobei die Summe 100 Mol % ergibt.

Bei den angegebenen Prozentsätzen ist darauf zu achten, daß die dem Fachmann bekannte Stöchiometrie der funktionellen Gruppen zur Polykondensation gewährleistet ist, d.h. daß funktionelle Gruppen, die miteinander in der Polykondensationsreaktion reagieren, in entsprechenden Verhältnissen eingesetzt werden. Beispielsweise bei Verwendung von Dicarbonsäuren und Diolen muß eine der Anzahl an Carboxylgruppen entsprechende Anzahl an Hydroxylgruppen vorhanden sein. Zusätzlich können die Polymere noch Komponenten mit nur einer funktionellen Gruppe oder mit mehr als zwei funktionellen Gruppen (Komponente e), wie beispielsweise Tricarbonsäuren, Dihydroxycarbonsäuren oder Triole, insbesondere Dihydroxybenzoesäure, Trihydroxybenzole oder Trimellitsäure, enthalten. Auf diese Weise kann Einfluß auf das Molekulargewicht der Polymeren genommen werden und es werden vernetzte oder teilvernetzte Polymere erhalten.

Besonders bevorzugt sind cholesterische Hauptkettenpolymere, die aus folgenden Bausteinen der einzelnen Monomergruppen aufgebaut sind:
a) Aromatische Hydroxycarbonsäuren, Aminocarbonsäuren:
   Hydroxybenzoesäuren, Hydroxynaphthalincarbonsäuren, Hydroxybiphenylcarbonsäuren, Aminobenzoesäuren, Hydroxyzimtsäuren;
b) Aromatische Dicarbonsäuren, aliphatische Dicarbonsäuren:
   Terephthalsäure, Isophthalsäure, Biphenyldicarbonsäuren, Naphthalindicarbonsäuren, Cyclohexandicarbonsäuren, Pyridindicarbonsäuren, Diphenyletherdicarbonsäuren, Carboxyzimtsäuren sowie 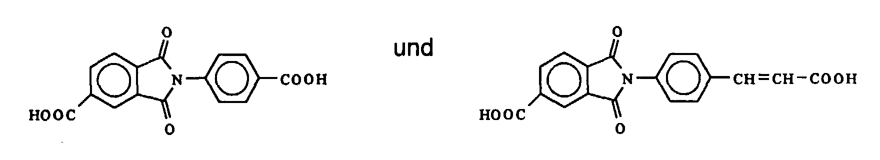
c) Aromatische Diole, Aminophenole, Diamine:
   Hydrochinone, Dihydroxybiphenyle, Tetramethyldihydroxybiphenyle, Naphthalindiole, Dihydroxydiphenylsulfone, Dihydroxydiphenylether, Dihydroxyterphenyle, Dihydroxydiphenylketone, Phenylendiamine, Diaminoanthrachinone, Dihydroxyanthrachinone sowie 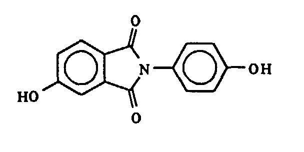
d) Chirale, bifunktionelle Monomere:
   Isosorbid, Isomannid, Isoidid, Camphersäure, (D)- oder (L)- Methylpiperazin, (D)- oder (L)- 3-Methyladipinsäure, Butan-2,3-diol sowie 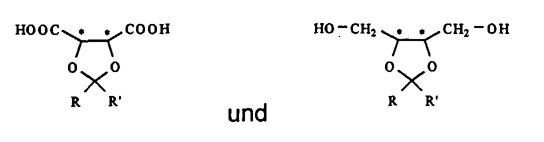 wobei R und R 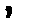 jeweils unabhängig voneinander H, C 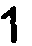 -C 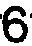 -Alkyl oder Phenyl, vorzugsweise H oder CH 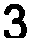 , sind.
e) Aromatische Phenole oder Carbonsäuren mit in der Summe mehr als zwei Hydroxy- oder Carboxylgruppen, wie beispielsweise Dihydroxybenzoesäure, Trihydroxybenzole,Benzoltricarbonsäuren, Perylentetracarbonsäure;
f) Comonomere, die folgende Molekülbausteine enthalten:
   o-Hydroxybenzophenone, wie z.B. 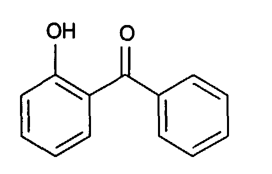 2-(o-Hydroxyphenyl)benzotriazole, wie z.B. 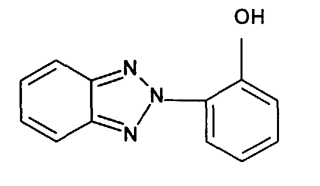 Phenylsalicylate, wie z.B. 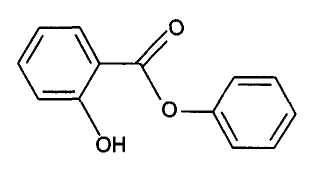 sterisch gehinderte Phenole, wie z.B. 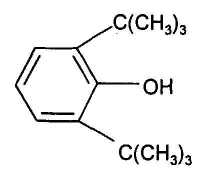 sterisch gehinderte Amine, wie z.B. 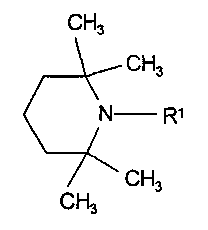 worin R¹ Wasserstoff, C₁-C₆-Alkyl, z.B. Methyl oder Ethyl, ist;
   Phosphine, wie z.B. 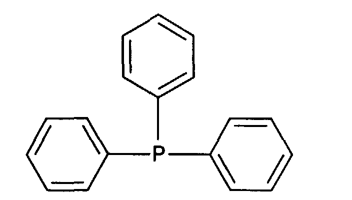 Phosphite, wie z.B. 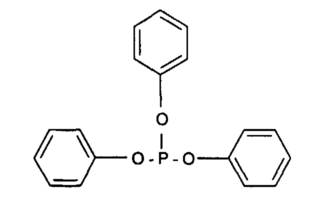 Phosphonite, wie z.B. 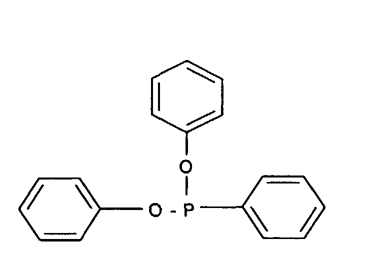 Arylsulfide, wie z.B.

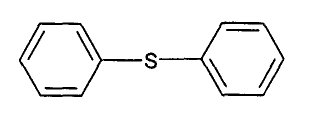

Besonders bevorzugte Hauptkettenpolymere enthalten Camphersäure oder/und Isosorbid als chirale Komponente sowie p-Hydroxybenzoesäure und/oder 2-Hydroxy-6-naphthoesäure und/oder Terephthalsäure und/oder Isophthalsäure und/oder Hydrochinon und/oder Resorcin und/oder 4,4'-Dihydroxybiphenyl und/oder 2,6-Naphthalindicarbonsäure, sowie vorstehend genannte Comonomere als Komponente f).

Die Herstellung der Hauptkettenpolymere kann über eine übliche Polykondensationsreaktion erfolgen. Beispielsweise eignet sich die Schmelzkondensation mit Acetanhydrid, die in DE 195 38 700 A1 oder EP-A-0 391 368 beschrieben ist.

Cholesterische flüssigkristalline Seitengruppenpolymere im Sinne der vorliegenden Erfindung sind beispielsweise Polyester oder Polyamide mit Mesogenen, einer chiralen Gruppe und einer Stabilisatorgruppe (Komponente f) in der Seitengruppe.

Die den Seitengruppenpolymeren zugrundeliegenden mesogenen Monomere sind vorzugsweise solche der Formel (1) 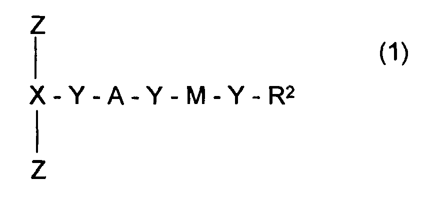 worin
- X: gleich C₁-C₁₂-Alkyl, Aryl, Heteroaryl oder Diphenylmethyl sein kann,
- Y: gleich oder verschieden ist und eine chemische Bindung, O, S, COO, OCO, OCOO, CON(R) oder N(R)CO, wobei R Wasserstoff oder C₁-C₄-Alkyl ist,
- A: eine chemische Bindung oder ein Spacer aus der Gruppe C₁-C₃₀-Alkyl, vorzugsweise C₂-C₁₂-Alkyl, wobei die Alkylkette durch ein oder mehrere, beispielsweise 1, 2, 3 oder 4, Gruppen der Formeln O, S, NH oder NCH₃ unterbrochen sein kann und wobei die Alkylkette durch Fluor, Chlor, Brom, Cyan, Methyl oder Ethyl substituiert sein kann,
- M: eine mesogene Gruppe,
- Z: eine polykondensierbare Gruppe, die gleich oder verschieden sein kann, vorzugsweise OH, COOH, NH₂, und
- R²: ein einwertiger Rest ist, beispielsweise H, C₁-C₆-Alkyl, Aryl oder C₂-C₆-Acyl, vorzugsweise H, CH₃, C₂H₅, COCH₃, C₆H₅,
bedeuten.

Besonders bevorzugt für X sind C₁-C₁₂-Alkyl, Phenyl, Pyridyl und Pyrimidinyl.

Besonders bevorzugt für A sind Reste der Formeln -(CH₂)ₚ-, -(CH₂CH₂O)ₘ-, -CH₂CH₂-S-CH₂-CH₂- und -CH₂CH₂-NH-CH₂CH₂-,
wobei m eine Zahl von 1 bis 3 und p eine Zahl von 1 bis 12 ist.

Als Reste M kommen insbesondere cycloaliphatische, aromatische oder heteroaromatische Reste der Formel (2) in Betracht

-(D-Y₁)ᵣ-D- (2)

in der die Reste
- D: unabhängig voneinander C₅-C₆-Cycloalkylen, ein Aromat, beispielsweise C₆H₅, oder Heteroaromat, z.B. Pyrimidin, die gegebenenfalls durch Fluor, Chlor, Brom, Cyan, Methyl, Methoxy oder Nitro substituiert sind;
- Y₁: O, COO, OCO, CH₂O, OCH₂, CH=N, N=CH oder eine direkte Bindung und
- r: eine Zahl von 0 bis 3 sind.

Vorzugsweise ist r Null oder 1.

Besonders bevorzugte mesogene Gruppen sind in der DE 42 28 280 A1 und DE 19 602 848 A1 beschrieben, insbesondere bevorzugt sind jedoch 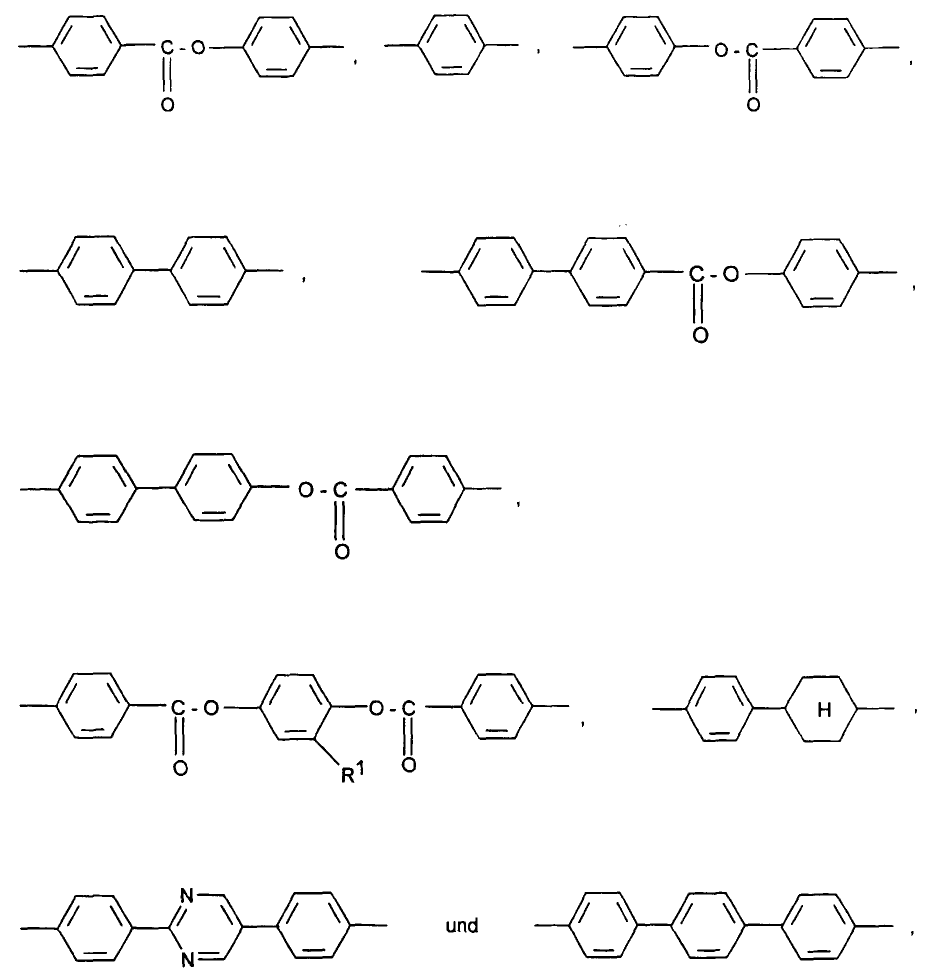 wobei R¹ Wasserstoff, Fluor, Chlor, Brom, Cyano, Methyl, Ethyl oder Nitro ist.

Die mesogenen Monomere der Formel (1) können entweder achiral oder chiral sein. Im Falle chiraler Monomere der Formel (1) kann die chirale Gruppe entweder Bestandteil des Spacers A, der mesogenen Gruppe M oder des Restes R² sein. Um mit Seitengruppenpolymeren einen variablen Farbeindruck im Sinne der vorliegenden Erfindung zu erzielen, werden vorzugsweise Mischungen aus chiralen und achiralen Verbindungen der Formel (1) eingesetzt.

Um die als Stabilisatoren wirksamen Comonomere an das cLCP chemisch binden zu können, muß mindestens eine polykondensierbare Gruppe im Molekül vorhanden sein.

Im Falle der Hauptkettenpolymere werden insbesondere Verbindungen aus der Gruppe 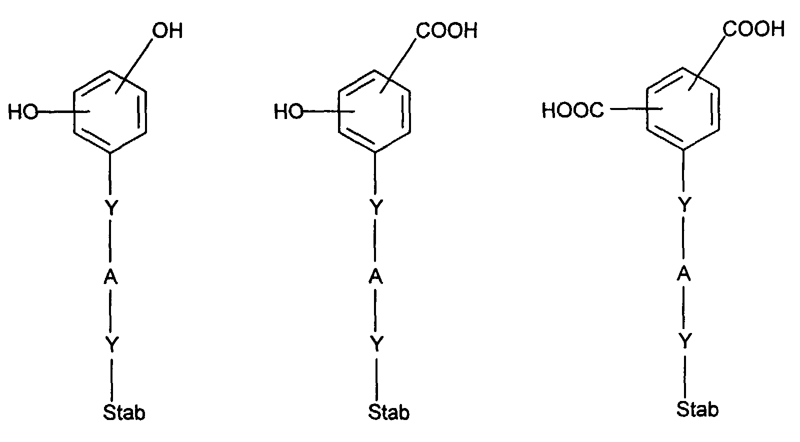 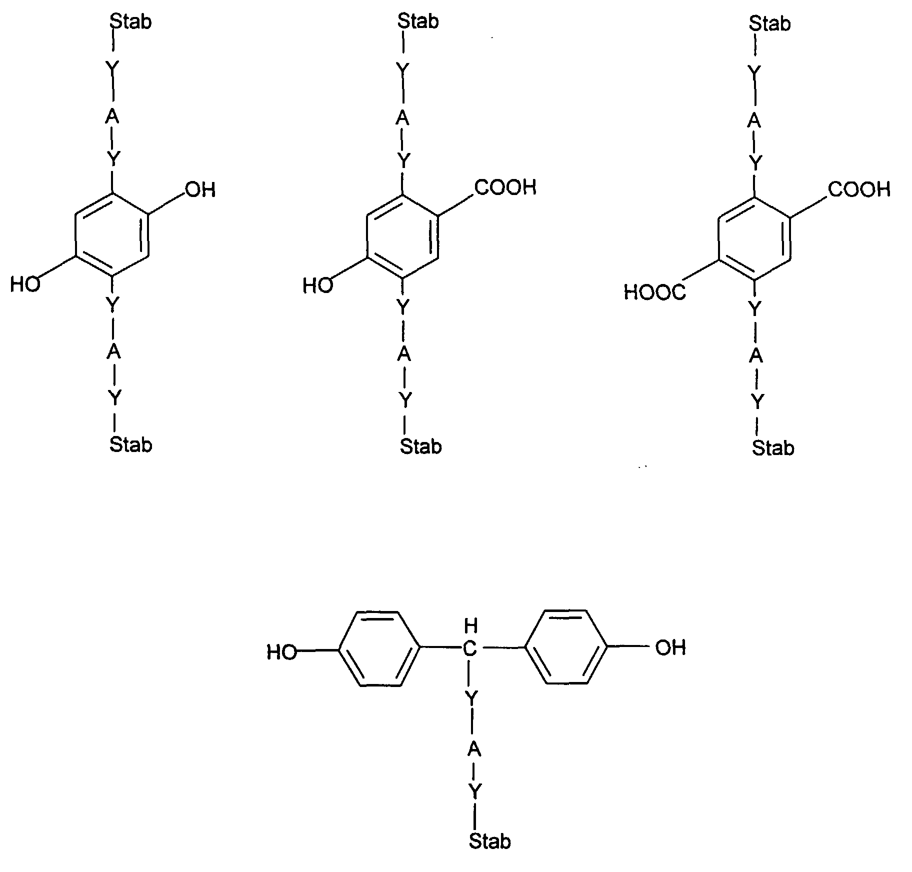 worin A und Y die vorstehend beschriebenen Bedeutungen haben und Stab eine Stabilisatorkomponente ist, eingesetzt.
Insbesondere als Rest "Stab" bevorzugt sind folgende Molekülkomponenten:
im Falle der UV-Absorber: 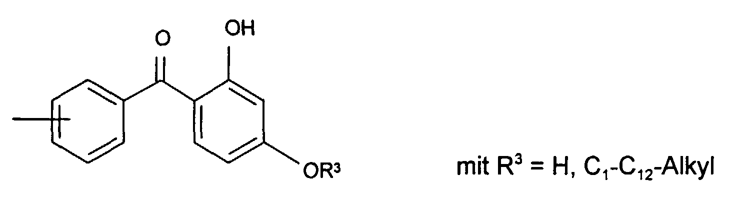 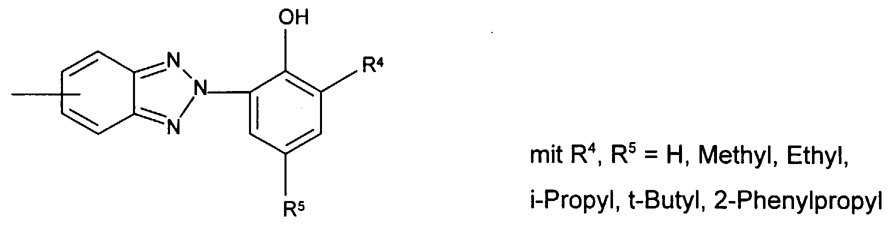 im Falle der sterisch gehinderten Phenole: 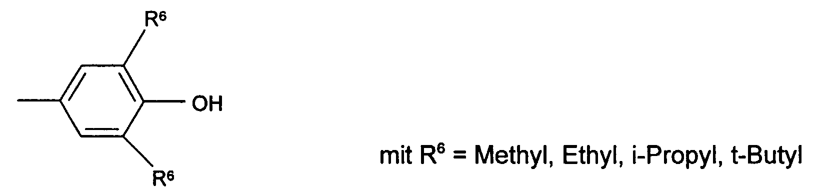 im Falle der sterisch gehinderten Amine: 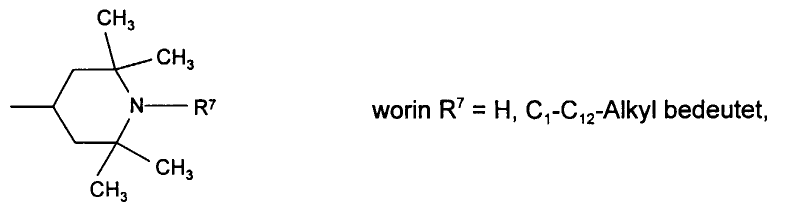 im Falle der Phosphine: 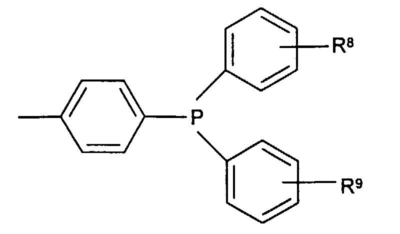 worin R⁸ und R⁹ unabhängig voneinander H oder C₁-C₁₂-Alkyl bedeuten,
im Falle der Phosphite: 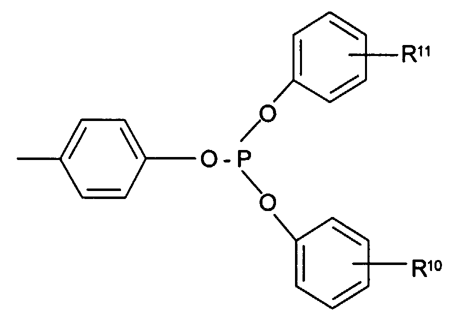 worin R¹⁰ und R¹¹ unabhängig voneinander H oder C₁-C₁₂-Alkyl bedeuten,
im Falle der Phosphonite: 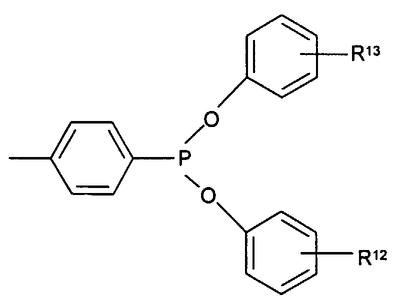 worin R¹² und R¹³ unabhängig voneinander H oder C₁-C₁₂-Alkyl bedeuten;
sowie

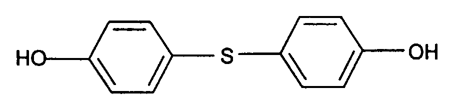

Es kann aber auch eine Verbindung der Formel (3)

H-Y-A-Y-Stab (3)

eingesetzt werden, die im Verlauf der Polykondensation an die Polymerhauptkette ankondensiert wird.

Im Falle der Seitengruppenpolymere werden insbesondere Verbindungen der Formel (4) 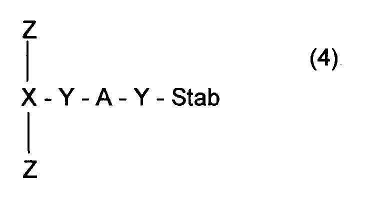 als Stabilisatoren in die Polymerkette eingebaut, worin Z, X, Y, A und Stab eine der vorstehend beschriebenen Bedeutungen haben.

Verbindungen der Formel (4) sind beispielsweise: 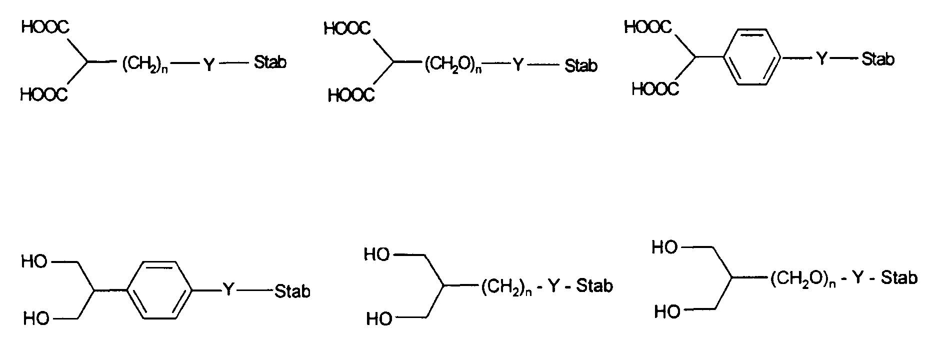 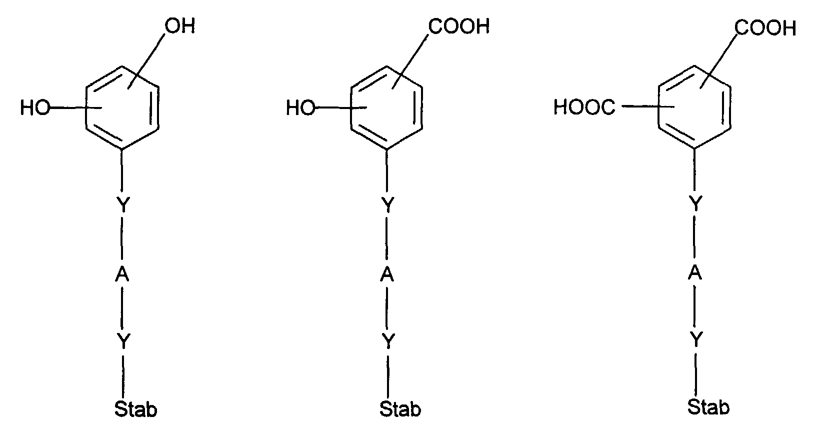 wobei Y, A und Stab eine der vorgehend beschriebenen Bedeutungen haben und n eine Zahl von 1 bis 12, vorzugsweise 1 bis 6, ist.

Gegenstand der vorliegenden Erfindung ist auch ein Verfahren zur Herstellung der wetterstabilisierten cLCPs, dadurch gekennzeichnet, daß die zugrundeliegenden Monomere miteinander vermischt und polymerisiert werden, oder daß zunächst ein nematisches LCP hergestellt und dieses mit einer chiralen polymerisierbaren Verbindung und einem polymerisierbaren Stabilisator-Comonomer umgesetzt wird, oder daß zunächst ein cholesterisches LCP hergestellt und dieses mit einem polymerisierbaren Stabilisator-Comonomer umgesetzt wird, oder daß ein Polymerblend aus mindestens einem cLCP und mindestens einem ein Stabilisator-Comonomer enthaltenden LCP, das nematisch oder cholesterisch sein kann, hergestellt wird.

Die einzelnen Komponenten können entweder direkt als niedermolekulare Monomere, reaktive Derivate dieser Monomere, z.B.Carbonsäurechloride, Carbonsäureester sowie acetylierte Hydroxyverbindungen, eingesetzt werden, oder es können auch niedermolekulare oder polymere Komponenten miteinander oder mit einem Polymer, welches schon einen Teil der Komponenten enthält, umgesetzt werden.

Beispielsweise ist es möglich, daß die chirale Komponente und das Stabilisator-Comonomer in einem Molekülbaustein vereint sind und dieser mit den übrigen Komponenten polymerisiert wird.

Die Polymerisation kann nach üblichen Methoden durchgeführt werden, z.B. durch Polykondensation in der Schmelze, in Lösung, in emulgierter oder in disperser Phase. Die Kondensation erfolgt zweckmäßigerweise bei Temperaturen von 0 bis 200°C, vorzugsweise 20 bis 180°C, vorteilhaft in Gegenwart einer Base.

Zu den flüssigkristallinen Polymeren können 0 bis 10 Gew.-%, vorzugsweise 0 bis 5 Gew.-%, bezogen auf das Gesamtgewicht, an üblichen Hilfsstoffen und Additiven aus der Gruppe der Verlaufadditive (z.B.Polyacrylate, Polyester, wie sie in Pulverlacksystemen verwendet werden), Antistatika und optischen Aufheller zugemischt werden.

Hilfsstoffe und/oder Additive werden mit dem cholesterischen Flüssigkristallpolymer vermischt, bis eine homogene Verteilung vorliegt. Die Vermischung erfolgt am günstigsten in der Schmelze des cholesterischen Flüssigkristallpolymeren. Das Vermischen kann mit allen dafür geeigneten Mischaggregaten, wie beispielsweise Dispersionsknetern, ®Banburry-Knetern oder Schneckenknetern, oder durch Extrusion, beispielsweise in einem Ein- oder Zweischneckenkneter, erfolgen. Insbesondere bei der Extrusion kann auch von einer pulverförmigen Mischung der Zusatzstoffe mit dem cholesterischen flüssigkristallinen Polymer ausgegangen werden.

Die erfindungsgemäßen Polymere können als Werkstoff weiterverarbeitet werden. Ein Werkstoff ist ein geformtes Gebilde, wie beispielsweise Spritzgußartikel, extrudierte Profile oder Rohre, Bändchen, Folien oder Fasern.

Insbesondere eignen sich die erfindungsgemäßen Polymere als Basismaterial zur Herstellung von Effektbeschichtungen aller Art, wie z. B.

Pulvereffektbeschichtungen, sowie zur Herstellung von insbesondere plättchenförmigen Effektpigmenten, die sich durch einen vom Blickwinkel abhängigen Farbeffekt und eine erhöhte Wetter- und Lichtstabilität auszeichnen.

Fallen die erfindungsgemäßen Polymere nicht bereits bei der Synthese als feinteiliges Pulver an, so können sie nach der Synthese für eine Anwendung als Beschichtungsmaterial in ein feinteiliges Pulver überführt werden. Wird die Synthese als Schmelzkondensation durchgeführt, so bietet sich nach der Synthese als erster Zerkleinerungsschritt eine Strang- oder Bandextrusion an. Die dabei erhaltenen Stränge oder Bänder lassen sich in bekannter Weise mit Schnitzlern oder Granulatoren in Chips oder Stranggranulate überführen. Die Polymere lassen sich jedoch auch auf anderen Wegen isolieren und anschließend durch Schneid- und Sägeprozesse grob zerkleinern. Zur weiteren Zerkleinerung bieten sich Mahlaggregate aller Arten und Ausführungsformen an. Dabei kann die erforderliche Endfeinheit in einem Verfahrensschritt oder auch in mehreren Teilschritten in gleichen oder verschiedenen Mühlentypen erreicht werden. Wird durch den ausgeführten Mahlprozess nicht direkt die gewünschte Mindestfeinheit und Korngrößenverteilung erzielt, so ist es angebracht, das Mahlgut während des Mahlprozesses oder nach dem Mahlprozess Sieb- oder Klassifizierprozessen zu unterwerfen, um die gewünschte Mindestfeinheit zu garantieren und eine gewünschte optimale Korngrössenfraktion zu erhalten. Als Mahlaggregate sind beispielsweise Schwing-, Scheibenschwing-, Scheiben-, Planeten-, Fliehkraft-, Mörser-, Kugel-, Schlagkreuz-, Schlagrotor-, Schneid-, Hammer-, Messer-, Rotor-Stator-, Prallteller-, Kugel- und insbesondere Ultra-Zentrifugal-, Universal-, Stift- und Luftstrahlmühlen geeignet. In speziellen Fällen kann auch eine Naßmahlung in Kugel-, Sand-, Schwing- oder Perlmühlen durchgeführt werden.

Eine Mahlung der erfindungsgemäßen Polymere kann unterbleiben, wenn sie durch Polymerisation in einer emulgierten oder dispergierten Phase hergestellt werden, wobei in der Regel ein feinteiliges Pulver erhalten wird.

Pulvereffektbeschichtungen lassen sich nach folgenden bevorzugten Methoden applizieren:
Das feinteilige Polymerpulver wird beim Versprühprozess elektrostatisch aufgeladen. Dies geschieht beim Corona-Verfahren durch Vorbeiführen des Pulvers an einer geladenen Corona. Dabei wird das Pulver selbst aufgeladen. Beim triboelektrischen bzw. elektrokinetischen Verfahren wird vom Prinzip der Reibungselektrizität Gebrauch gemacht. Das Pulver erhält im Sprühgerät eine elektrostatische Aufladung, die der Ladung des Reibungspartners, im allgemeinen ein Schlauch oder ein Sprührohr (beispielsweise aus Polytetrafluorethylen), entgegengesetzt ist. Die elektrostatische Aufladung führt zu einem hohen Abscheidegrad des Pulvers auf dem zu beschichtenden Gegenstand. Nach dem Auftragprozess auf das Objekt wird die Pulverschicht auf Temperaturen oberhalb des Erweichungspunktes des Pulvers erhitzt, bei welchen die Polymere einen homogenen Film bilden und die helikalen Überstrukturen ausbilden. Die Temperatur, bei welcher die Ausbildung der helikalen Struktur beginnt, wird im folgenden als Chiralisierungstemperatur bezeichnet.

Die speziellen optischen Eigenschaften einer Pulvereffektbeschichtung werden erst beobachtet, wenn die Moleküle oberhalb der Chiralisierungstemperatur des Polymeren die helikale Struktur ausbilden. Der Übergang in die cholesterische Phase erfolgt in vielen Fällen bereits bei der Synthese der Polymeren. Die Wellenlänge der Selektivreflexion der erfindungsgemäß eingesetzten cLCPs wird durch die Ganghöhe der helikalen Struktur bestimmt. Die Ganghöhe ist abhängig von der Struktur des Polymeren, der Schmelzviskosität, der Gegenwart von Lösemitteln und insbesondere von der Verdrillungskraft des chiralen Monomers ("helical twisting power"). Sie ist außerdem eine Funktion der Temperatur. Entsprechend läßt sich die Ganghöhe der Helix auch über die Temperatur einstellen. Durch schnelles Abkühlen der beschichteten Substrate läßt sich die Ganghöhe der Helix und somit die Selektivreflexion dauerhaft einfrieren. Beim langsamen Abkühlen muß mit coloristischen Veränderungen gerechnet werden. Im allgemeinen werden auch auf diese Weise gefärbte Substrate erhalten. Es ist jedoch schwierig, die Endcoloristik vorherzubestimmen. Wird das abgekühlte Substrat erneut erhitzt, so lassen sich neue oder auch wieder die gleichen Ganghöhen der Helix und somit die Wellenlänge der Selektivreflexion einstellen. Durch diesen Vorgang kann die Coloristik des beschichteten Substrats auf einfache Weise variiert und korrigiert werden. Für die Anwendung in der Praxis ist es wichtig, daß der Schmelzpunkt und die Chiralisierungstemperatur des Polymeren oberhalb der Gebrauchstemperatur des beschichteten Substrats liegen.

Begünstigt werden kann die Ausbildung der helikalen Struktur durch die Temperatur, die Einwirkung von Scherkräften und durch Untergründe mit polymeren Schichten, wie beispielsweise Polyvinylalkohol, Cellulosederivate und Polyimide. Der Orientierungsprozess der Polymermoleküle kann je nach Struktur der Polymeren auch durch elektrische und magnetische Felder positiv beeinflußt werden.

Eine weitere, bevorzugte Möglichkeit zur Beschichtung von Objekten mit pulverförmigen Stoffen ist das Flammspritzverfahren. Bei diesem Verfahren wird das Pulver mit einem Trägergas (z. B. in einem Wirbelbett) fluidisiert und der zentralen Düse einer Flammspritzpistole zugeführt. Gleichzeitig wird in der Flammspritzpistole ein Brenngas/Sauerstoffgemisch erzeugt, welches in vielen kleinen um das Zentrum herum ringförmig angeordneten Flämmchen verbrannt wird. Dabei schmelzen die pulverförmigen Teilchen auf und werden anschließend auf dem zu beschichtenden Objekt als Tröpfchen abgeschieden, die im Verlauf des Spritzprozesses zu einem Film zusammenfließen. Dieses Verfahren bietet den besonderen Vorteil, daß der Schmelzvorgang in den Versprühprozess integriert ist, so daß in einem Arbeitsschritt der Auftrag der Beschichtung auf den Gegenstand und die Filmbildung erfolgen kann.

Eine weitere bevorzugte Ausführungsform zur Pulverbeschichtung ist das Wirbelsinterverfahren. Hierzu wird in einem geeigneten Behälter mit Hilfe eines Trägergases und dem erfindungsgemäßen Polymerpulver eine Wirbelschicht erzeugt. Das zu beschichtende Objekt wird in einer separaten Wärmekammer auf die für die Beschichtung notwendige Temperatur erhitzt, und nach Erreichen dieser Temperatur wird es für eine bestimmte Zeit in die Wirbelschicht eingetaucht. Dabei bleiben pulverförmige Teilchen an der Objektoberfläche haften, schmelzen auf, fließen zu einem Film zusammen und bilden die helikale Struktur aus. In manchen Fällen ist es vorteilhaft, das beschichtete Objekt einer weiteren Temperaturbehandlung zu unterziehen, um die Filmbildung und die Orientierung der Polymermoleküle zu verbessern. In anderen Fällen läßt man das Objekt an der Luft abkühlen oder schreckt es mit Wasser ab. Auch dieses Verfahren bietet den besonderen Vorteil, daß der Schmelzvorgang in den Beschichtungsprozess integriert ist, so daß in einem Arbeitsschritt der Auftrag der Beschichtung auf den Gegenstand, die Orientierung der Polymermoleküle und die Filmbildung erfolgen kann.

Bei allen beschriebenen Pulverbeschichtungsverfahren und insbesondere beim Wirbelsinter- und Flammspritzverfahren ist die Teilchenform und damit die Rieselfähigkeit des Pulvers sowie die Korngrößenverteilung des Pulvers von großer Bedeutung. Bevorzugt sind Teilchen, die der Kugelform möglichst nahe kommen und die eine enge Korngrößenverteilung aufweisen. Kugelförmige Teilchen werden auf einfache Weise bei Prozessen erhalten, bei welchen die Polymerisation in einer emulgierten oder dispergierten Phase durchgeführt wird. Bei den Mahlprozessen werden je nach eingesetztem Mühlentyp engere oder breitere Korngrößenverteilungen erhalten. In einigen Fällen ist es vorteilhaft, einen Sieb-, Klassifizier- oder Sichtungsprozess an die Mahlung anzuschließen, um eine möglichst enge Korngrößenverteilung zu erreichen. In anderen Fällen ist es vorteilhaft, zuerst ein sehr feinteiliges Pulver herzustellen, welches dann gezielt zu der gewüschten Teilchengröße agglomeriert werden kann.

Die gewünschte Kornfeinheit ist ausschlaggebend für die Schichtdicke der Pulvereffektbeschichtung, die Art des zu beschichtenden Objekts und das angewandte Applikationsverfahren. Werden auf dem zu beschichtenden Objekt dünne Lackschichten gewünscht, so ist eine mittlere Teilchengröße des Pulvers zwischen 1 und 100 µm, vorzugsweise zwischen 15 und 80 µm, anzustreben. Werden dicke Schichten auf dem Objekt gewünscht, wie sie normalerweise beim Wirbelsintern und Flammspritzen appliziert werden, so ist eine mittlere Teilchengröße zwischen 80 und 300 µm, vorzugsweise 100 bis 250 µm, vorteilhaft. Beim Wirbelsintern und Flammspritzen ist auf die Einhaltung der Korngrößengrenzen besonders zu achten. Zu kleine Teilchen werden durch die hohen Flammtemperaturen zu stark erhitzt und verkohlen oder werden durch den Gasstrom weggeblasen. Zu grobe Teilchen werden dagegen nicht vollständig aufgeschmolzen und können sich bei der anschließenden Filmbildung nicht optimal orientieren. In Ausnahmefällen kann es jedoch auch vorteilhaft sein, eine außerhalb dieses Bereichs liegende Korngrößenverteilung zu verwenden.

Pulvereffektbeschichtungen können auf die unterschiedlichsten Substrate aufgebracht werden. Dies können beispielsweise Gegenstände aus natürlichen und synthetischen Materialien wie beispielsweise Holz, Kunststoffe, Metall oder Glas sein. Wird die Effektbeschichtung ohne eine Vorbeschichtung aufgebracht, so empfiehlt sich ein Auftrag in einer Schichtdicke, die den Untergrund abdeckt. Es können selbstverständlich auch mehrere Schichten aufgetragen oder semitransparente Beschichtungen hergestellt werden. Besonders bevorzugt ist die Beschichtung der Karosserie oder von Karosserieteilen von Kraftfahrzeugen.

In bevorzugten Fällen wird die Pulvereffektbeschichtung auf Metall- oder Kunststoffuntergründe aufgebracht. Diese sind meistens vorbeschichtet. Das heißt, Kunststoffsubstrate können mit einer Kunststoffgrundierung versehen sein, und metallische Substrate besitzen im allgemeinen eine elektrophoretisch aufgebrachte Grundierung und gegebenenfalls eine oder mehrere weitere Lackschichten wie beispielsweise eine Füllerschicht.

Besonders bevorzugt sind dunkle Untergründe. Unter dunklem Untergrund ist in diesem Zusammenhang nicht nur ein an seiner Oberfläche mit einer dunklen Lackschicht versehenes Substrat zu verstehen, sondern auch ein in sich dunkel gefärbtes Substrat, beispielsweise ein Kunststoffsubstrat oder ein mit einer dunklen Oxidschicht überzogenes Metallsubstrat. Beispiele für dunkle Lackschichten sind elektrophoretisch oder durch Spritz- oder Pulverlackierung aufgebrachte Grundierungen, Kunststoffgrundierungen, Füller- und Steinschlagschutzschichten oder auch unifarbene Basis- und Decklackschichten. Beispiele für dunkle Untergründe sind dunkelrot, dunkelblau, dunkelgrün, dunkelbraun, dunkelgrau und insbesondere schwarz. Pulverbeschichtungen können auch auf hellen Untergründen oder in deckenden Schichten appliziert werden. Dabei kommt jedoch der vom Betrachtungswinkel abhängige Farbeindruck nur abgeschwächt zum Ausdruck.

Pulvereffektbeschichtungen können nach üblichen Methoden mit einem Klarlack überzogen werden. Als Klarlack sind grundsätzlich alle bekannten Klarlacke oder transparent pigmentierten Überzugsmittel geeignet. Hierbei können sowohl lösungsmittelhaltige Einkomponenten- oder Zweikomponenten-Lacke sowie vorzugsweise wasserverdünnbare Klarlacke und insbesondere Pulverlacke eingesetzt werden. In manchen Fällen kann es zweckmäßig sein, die Klarlackschicht etwas dicker zu wählen oder 2 Klarlackschichten aus gleichen oder verschiedenen Flüssigklarlacken oder Pulverklarlacken aufzutragen.

Eine weitere Möglichkeit, die cholesterischen flüssigkristallinen Polymere in Effektbeschichtungen zu überführen, ist die Lösungsbeschichtung. Hierbei wird das Polymer in einem Lösemittel gelöst und aus der Lösung ein Film auf das zu beschichtende Substrat gebracht. Dies kann beispielsweise durch Spritzen, Rakeln, Gießen, Tauchen oder mit einem Pinsel geschehen. Nach dem Abdampfen des Lösemittels bildet das Polymer eine brillante Effektbeschichtung.

Eine weitere Möglichkeit, die cholesterischen flüssigkristallinen Polymere in Effektbeschichtungen zu überführen, ist die Schmelzbeschichtung. Hierbei wird das Polymer in der Schmelze auf das Substrat aufgezogen oder auf dem Substrat aufgeschmolzen und zu einer dünnen Schicht verarbeitet. Zum Aufbringen des Polymers eignet sich beispielsweise ein beheizbarer Rakel. Der Auftrag kann aber auch mit einfacheren Mitteln, wie beispielsweise einem Spachtel, erfolgen.

Die erfindungsgemäßen Polymere können auch zur Herstellung von Effektpigmenten verwendet werden. Hierfür werden die Polymere, vorzugsweise cholesterische Hauptkettenpolymere, beispielsweise in der Schmelze oder einer Dispersion auf einen Träger aufgebracht. Als Träger eignet sich beispielsweise eine Folie oder rotierende Walze. Der Auftrag kann mit einem Rakel erfolgen. Es eignen sich aber auch andere Auftragsformen, wie Sprühen oder Drucken. Die aufgetragene Schicht hat zweckmäßigerweise eine Dicke zwischen 1 µm und 100 µm, vorzugsweise zwischen 1 µm und 25 µm. Da die cholesterischen Flüssigkristalle die gewünschten optischen Effekte nur im orientierten Zustand aufweisen, ist auf eine gute Orientierung zu achten. Teilweise orientieren sich die cLCPs spontan, es kann aber auch notwendig sein, dem Fachmann bekannte Methoden der Orientierungsverbesserung, wie beispielsweise Temperaturbehandlung, Scherkräfte oder Orientierungsschichten, anzuwenden.

Anschließend wird der Film vom Träger abgelöst und mit gängigen Methoden auf die gewünschte Plättchengröße zerkleinert. Es ist darauf zu achten, daß noch immer eine plättchenförmige Geometrie vorhanden ist, d.h. es sollte ein Plättchendurchmesser vorhanden sein, der mindestens zwei- bis dreimal so groß wie die Plättchendicke ist. So sollte die Plättchendicke im Bereich von 1 bis 100 µm, bevorzugt zwischen 1 und 25 µm, insbesondere zwischen 3 und 15 µm liegen. Der Plättchendurchmesser liegt im Bereich von 10 bis 250 µm, bevorzugt zwischen 20 und 90 µm.

Die erfindungsgemäßen Effektpigmente zeichnen sich neben ihrer erhöhten Wetter- und Lichtstabilität durch brillante, blickwinkelabhängige Farbeffekte aus.

Lacke, die die erfindungsgemäßen Effektpigmente enthalten, können für die Lackierung von natürlichen und synthetischen Materialien, beispielsweise Holz, Metall oder Glas, insbesondere zur Lackierung von Karosserien oder von Karroserieteilen von Kraftfahrzeugen, verwendet werden.

Die erfindungsgemäßen Polymere sowie daraus hergestellte Effektpigmente können auch in Komponenten für berührungslose Druckverfahren eingesetzt werden, beispielsweise in elektrophotographischen Tonern und Entwicklern und in Ink-Jet-Tinten.

### Beispiel 1: Herstellung eines unvernetzten Hauptkettenpolymers

1,8 Mol 2-Hydroxy-6-naphthoesäure, 4,8 Mol 4-Hydroxy-benzoesäure, 1,7 Mol 4,4'-Dihydroxybiphenyl, 1,7 Mol (1R,3S)-(+)-Camphersäure und 0,1 Mol 4-Hydroxy-2,2,6,6-tetramethylpiperidin werden mit 10,25 Mol Essigsäureanhydrid sowie 0,5 g Kaliumacetat versetzt und mit einem leichten Stickstoffstrom durchspült. Die Mischung wird innerhalb von 15 Minuten auf 150°C erhitzt und diese Temperatur für 115 Minuten gehalten. Anschließend wird die Temperatur innerhalb von
180 Minuten auf 300°C erhöht und die Schmelze 60 Minuten bei dieser Temperatur gehalten. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Anschließend wird das Polymer mit Stickstoff belüftet, abgekühlt und isoliert. Das Polymer zeigt bei senkrechtem Anblick eine brillante blaustichig grüne Farbe, die bei schrägem Betrachungswinkel violettstichig blau erscheint.

### Beispiel 2: Herstellung eines Effektpigmentes

Als cholesterisches Flüssigkristallpolymer wird das in Beispiel 1 beschriebene Polymer eingesetzt.

Das Polymer wird mit einer Luftstrahlmühle zu einer mittleren Korngröße zwischen 5 und 10 µm gemahlen. Mit dem gemahlenen Material wird eine 30 %-ige Dispersion in Isobutanol angerührt und die Dispersion mit einem Rakel, dessen Spaltbreite 24 µm beträgt, auf eine Aluminiumfolie aufgezogen. Nach dem Trocknen des Dispersionsauftrages wird das Pulver für 5 Minuten bei 280°C eingebrannt. Der Film zeigt eine blaustichiggrüne Farbe, die bei schrägem Anblick violettstichig blau erscheint. Die cLCP-Schicht ist sehr gut ausgebildet und homogen. Die Schichtdicke liegt bei 8 - 11 µm.
Zur Herstellung des Effektpigments wird die mit cLCP beschichtete Aluminiumfolie in halbkonzentrierter Salzsäure gegeben, wobei sich die Aluminiumträgerfolie auflöst und der cholesterische Polymerfilm zurückbleibt. Die Polymerpartikel werden in einer Universalmühle gemahlen. Das Mahlgut wird zur Verengung der Teilchengrößenverteilung über einen Sieb mit 63 µm Maschenweite gesiebt. Das erhaltene Effektpigment wird in einen 2-Komponenten-Klarlack eingearbeitet, auf ein schwarzgrundiertes Blech aufgesprüht und mit Klarlack überzogen. Nach dem Einbrennen zeigt der Lack eine grüne Farbe, die bei schrägem Anblick blau erscheint.

### Beispiel 3: Herstellung eines unvernetzten Hauptkettenpolymers

1,7 Mol 2-Hydroxy-6-naphthoesäure, 4,8 Mol 4-Hydroxy-benzoesäure, 1,8 Mol 4,4'-Dihydroxybiphenyl, 1,7 Mol (1R,3S)-(+)-Camphersäure und 1 Mol einer Mischung aus 1,2,4,5-Benzoltetracarbonsäure-1,4- und 1,5-bis-(2,2,6,6-tetramethyl-4-piperidinyl)ester werden mit 10,25 Mol Essigsäureanhydrid sowie 0,5 g Kaliumacetat versetzt und mit einem leichten Stickstoffstrom durchspült. Die Mischung wird innerhalb von 15 Minuten auf 150°C erhitzt und diese Temperatur für 115 Minuten gehalten. Anschließend wird die Temperatur innerhalb von 180 Minuten auf 300°C erhöht und die Schmelze 60 Minuten bei dieser Temperatur gehalten. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 4 mbar) gerührt. Anschließend wird das Polymer mit Stickstoff belüftet, abgekühlt und isoliert. Das Polymer zeigt bei senkrechtem Anblick eine brillante grüne Farbe, die bei schrägem Betrachtungswinkel blau erscheint.

### Beispiel 4: Herstellung eines Effektpigmentes

Als cholesterisches Flüssigkristallpolymer wird das in Beispiel 3 beschriebene Polymer eingesetzt.
Das Polymer wird mit einer Luftstrahlmühle zu einer mittleren Korngröße zwischen 5 und 10 µm gemahlen. Mit dem gemahlenen Material wird eine 30 %ige Dispersion in Isobutanol angerührt und die Dispersion mit einem Rakel, dessen Spaltbreite 24 µm beträgt, auf eine Aluminiumfolie aufgezogen. Nach dem Trocknen des Dispersionsauftrages wird das Pulver für 5 Minuten bei 280°C eingebrannt. Der Film zeigt eine grüne Farbe, die bei schrägem Anblick blau erscheint. Die cLCP-Schicht ist sehr gut ausgebildet und homogen. Die Schichtdicke liegt bei 8 - 11 µm.
Zur Herstellung des Effektpigments wird die mit cLCP beschichtete Aluminiumfolie in halbkonzentrierte Salzsäure gegeben, wobei sich die Aluminiumträgerfolie auflöst und der cholesterische Polymerfilm zurückbleibt. Die Polymerpartikel werden in einer Universalmühle gemahlen. Das Mahlgut wird zur Verengung der Teilchengrößenverteilung über ein Sieb mit 63 µm Maschenweite gesiebt. Das erhaltene Effektpigment wird in einen 2-Komponenten-Klarlack eingearbeitet, auf ein schwarzgrundiertes Blech aufgesprüht und mit Klarlack überzogen. Nach dem Einbrennen zeigt der Lack eine grüne Farbe, die bei schrägem Anblick blau erscheint.

### Beispiel 5: Herstellung eines unvernetzten Hauptkettenpolymers

1,7 Mol 2-Hydroxy-6-naphthoesäure, 4,8 Mol 4-Hydroxy-benzoesäure, 1,8 Mol 4,4'-Dihydroxybiphenyl, 1,7 Mol (1R,3S)-(+)-Camphersäure und 1 Mol einer Mischung aus 1,2,4,5-Benzoltetracarbonsäure 1,4- und 1,5-bis-(1,2,2,6,6-pentamethyl-4-piperidinyl)ester werden mit 10,25 Mol Essigsäureanhydrid sowie 0,5 g Kaliumacetat versetzt und mit einem leichten Stickstoffstrom durchspült. Die Mischung wird innerhalb von 15 Minuten auf 150°C erhitzt und diese Temperatur für 115 Minuten gehalten. Anschließend wird die Temperatur innerhalb von 180 Minuten auf 300°C erhöht und die Schmelze 60 Minuten bei dieser Temperatur gehalten. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Anschließend wird das Polymer mit Stickstoff belüftet, abgekühlt und isoliert. Das Polymer zeigt bei senkrechtem Anblick eine brillante grüne Farbe, die bei schrägem Betrachtungswinkel blau erscheint.

### Beispiel 6: Herstellung eines Effektpigmentes

Als cholesterisches Flüssigkristallpolymer wird das in Beispiel 5 beschriebene Polymer eingesetzt.
Das Polymer wird mit einer Luftstrahlmühle zu einer mittleren Korngröße zwischen 5 und 10 µm gemahlen. Mit dem gemahlenen Material wird eine 30 %ige Dispersion in Isobutanol angerührt und die Dispersion mit einem Rakel, dessen Spaltbreite 24 µm beträgt, auf eine Aluminiumfolie aufgezogen. Nach dem Trocknen des Dispersionsauftrages wird das Pulver für 5 Minuten bei 270°C eingebrannt. Der Film zeigt eine grüne Farbe, die bei schrägem Anblick blau erscheint. Die cLCP-Schicht ist sehr gut ausgebildet und homogen. Die Schichtdicke liegt bei 8 - 11 µm. Zur Herstellung des Effektpigments wird die mit cLCP beschichtete Aluminiumfolie in halbkonzentrierte Salzsäure gegeben, wobei sich die Aluminiumträgerfolie auflöst und der cholesterische Polymerfilm zurückbleibt. Die Polymerpartikel werden in einer Universalmühle gemahlen. Das Mahlgut wird zur Verengung der Teilchengrößenverteilung über einen Sieb mit 63 µm Maschenweite gesiebt. Das erhaltene Effektpigment wird in einen 2-Komponenten-Klarlack eingearbeitet, auf ein schwarzgrundiertes Blech aufgesprüht und mit Klarlack überzogen. Nach dem Einbrennen zeigt der Lack eine grüne Farbe, die bei schrägem Anblick blau erscheint.

## Patentansprüche

1. Cholesterisches flüssigkristallines Polymer, das mindestens ein Stabilisator-Comonomer aus der Gruppe der UV-Absorber oder Antioxidantien im Molekül enthält.

2. Polymer nach Anspruch 1, dadurch gekennzeichnet, daß das Stabilisator-Comonomer ein o-Hydroxybenzophenon, 2-(o-Hydroxyphenyl)-benzotriazol, Phenylsalicylat, ein sterisch gehindertes Phenol, ein sterisch gehindertes Amin, ein Phosphin, ein Phosphit, ein Phosphonit, ein Thiocarbonsäureester, ein Alkylsulfid oder eine Kombination davon ist.

3. Polymer nach Anspruch 1 oder 2, dadurch gekennzeichnet, daß es ein Hauptkettenpolymer aus der Gruppe der flüssigkristallinen Polyester, Polyamide, Polycarbonate, Polyesteramide oder Polyesterimide ist, die aromatische Aminocarbonsäuren, aromatische und/oder cycloaliphatische Dicarbonsäuren und aromatische und/oder cycloaliphatische Diole und/oder Diamine, sowie ein oder mehrere chirale, bifunktionelle Comonomere enthalten.

4. Polymer nach Anspruch 3, dadurch gekennzeichnet, daß das Hauptkettenpolymer im wesentlichen aus den Komponenten a) bis f) besteht,
a) 0 bis 99 Mol % einer oder mehrerer Verbindungen aus der Gruppe der aromatischen Hydroxycarbonsäuren, cycloaliphatischen Hydroxycarbonsäuren und aromatischen Aminocarbonsäuren;
b) 0 bis 49,5 Mol % einer oder mehrerer Verbindungen aus der Gruppe der aromatischen Dicarbonsäuren und cycloaliphatischen Dicarbonsäuren;
c) 0 bis 49,5 Mol % einer oder mehrerer Verbindungen aus der Gruppe der aromatischen und cycloaliphatischen Diole und Diamine;
d) 0,95 bis 40 Mol %, vorzugsweise 2 bis 25 Mol%, insbesondere 4 bis 20 Mol %, an chiralen, bifunktionellen Comonomeren;
e) 0 bis 15 Mol % einer Komponente mit mehr als zwei funktionellen Gruppen; und
f) 0,05 bis 10 Mol %, vorzugsweise 0,1 bis 2 Mol %, eines der genannten Comonomere, das als Stabilisator wirkt.

5. Polymer nach Anspruch 3 oder 4, dadurch gekennzeichnet, daß das chirale, bifunktionelle Comonomer Isosorbid, Isomannid, Isoidid, Camphersäure, (D)- oder (L)- Methylpiperazin, (D)- oder (L)- 3-Methyladipinsäure, Butan-2,3-diol sowie 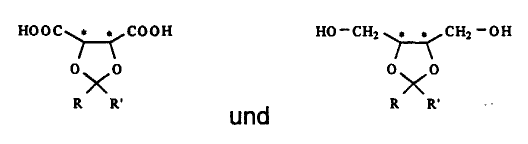 wobei R und R 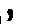 jeweils unabhängig voneinander H, C 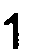 -C 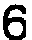 -Alkyl oder Phenyl, vorzugsweise H oder CH₃, sind, ist.

6. Polymer nach Anspruch 1 oder 2, dadurch gekennzeichnet, daß es ein Seitengruppenpolymer aus der Gruppe der Polyester oder Polyamide mit Mesogenen, einer chiralen Gruppe und einem Comonomer aus der Gruppe der UV-Absorber oder Antioxidantien in der Seitengruppe ist.

7. Polymer nach Anspruch 6, dadurch gekennzeichnet, daß die den Mesogenen zugrundeliegenden Verbindungen solche der Formel (1) sind 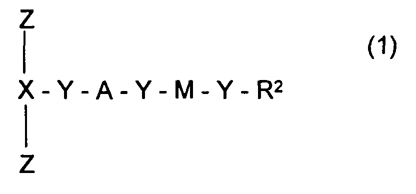 worin
X gleich C₁-C₁₂-Alkyl, Aryl, Heteroaryl oder Diphenylmethyl sein kann,
Y gleich oder verschieden ist und eine chemische Bindung, O, S, COO, OCO, OCOO, CON(R) oder N(R)CO, wobei R Wasserstoff oder C₁-C₄-Alkyl ist,
A eine chemische Bindung oder ein Spacer aus der Gruppe C₁-C₃₀-Alkyl, vorzugsweise C₂-C₁₂-Alkyl, wobei die Alkylkette durch ein oder mehrere Gruppen der Formeln O, S, NH oder NCH₃ unterbrochen sein kann und wobei die Alkylkette durch Fluor, Chlor, Brom, Cyan, Methyl oder Ethyl substituiert sein kann,
M eine mesogene Gruppe,
Z eine polykondensierbare Gruppe, die gleich oder verschieden sein kann, vorzugsweise OH, COOH, NH₂, und
R² ein einwertiger Rest ist, vorzugsweise H, CH₃, C₂H₅, COCH₃, C₆H₅, bedeuten.

8. Polymer nach Anspruch 7, dadurch gekennzeichnet, daß M ein Rest der Formel (2) ist
-(D-Y₁)ᵣ-D- (2)
in der die Reste
D unabhängig voneinander C₅-C₆-Cycloalkylen, ein Aromat oder Heteroaromat, die gegebenenfalls durch Fluor, Chlor, Brom, Cyan, Methyl, Methoxy oder Nitro substituiert sind;
Y₁ O, COO, OCO, CH₂O, OCH₂, CH=N, N=CH oder eine direkte Bindung und
r eine Zahl von 0 bis 3 sind.

9. Verfahren zur Herstellung eines cholesterischen flüssigkristallinen Polymers nach einem oder mehreren der Ansprüche 1 bis 8, dadurch gekennzeichnet, daß die zugrundeliegenden Monomere miteinander vermischt und polymerisiert werden, oder daß zunächst ein nematisches LCP hergestellt und dieses mit einer chiralen polymerisierbaren Verbindung und einem polymerisierbaren Stabilisator-Comonomer umgesetzt wird, oder daß zunächst ein cholesterisches LCP hergestellt und dieses mit einem polymerisierbaren Stabilisator-Comonomer umgesetzt wird, oder daß ein Polymerblend aus mindestens einem cLCP und mindestens einem ein Stabilisator-Comonomer enthaltenden LCP, das nematisch oder cholesterisch sein kann, hergestellt wird.

10. Verfahren nach Anspruch 9, dadurch gekennzeichnet, daß als polymerisierbares Stabilisator-Comonomer eine Verbindung aus der Gruppe 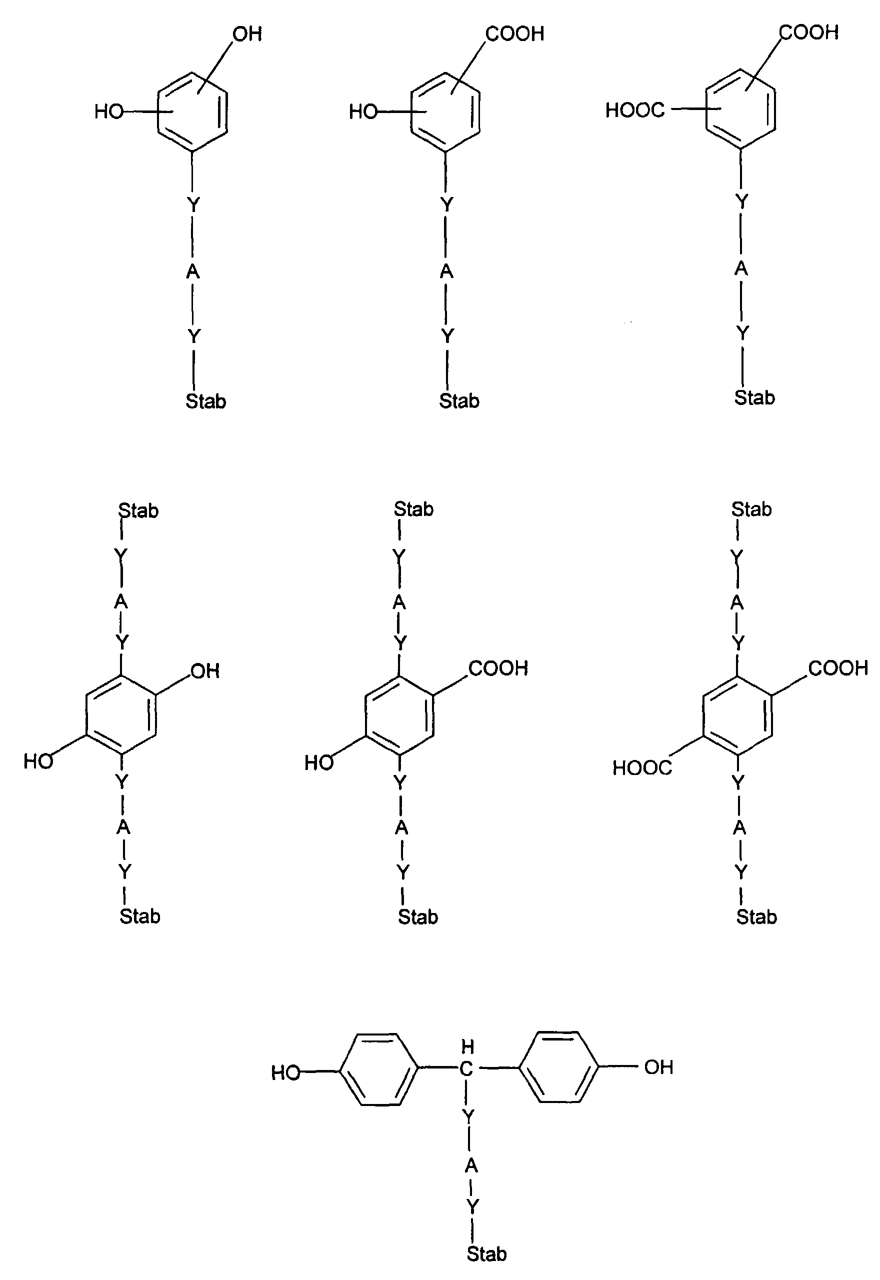 oder der Formel (3)
H-Y-A-Y-Stab (3)
worin A und Y wie in Anspruch 7 definiert sind und Stab ein Rest eines der in Anspruch 2 genannten Stabilisator-Comonomere ist, eingesetzt wird.

11. Verfahren nach Anspruch 9, dadurch gekennzeichnet, daß als polymerisierbares Stabilisator-Comonomer eine Verbindung der Formel (4) 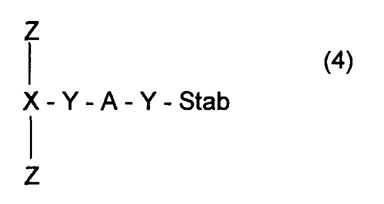 worin A, Y, X und Z wie in Anspruch 7 definiert sind und Stab ein Rest eines der in Anspruch 2 genannten Stabilisator-Comonomere ist, eingesetzt wird.

12. Verwendung eines cholesterischen flüssigkristallinen Polymers nach einem oder mehreren der Ansprüche 1 bis 8 als Werkstoff oder als Ausgangsmaterial zur Herstellung von Effektpigmenten und Effektbeschichtungen.
